# EUROPEAN PATENT SPECIFICATION

(11) **EP 3 178 689 B1**
(45) Date of publication and mention of the grant of the patent: **24.02.2021**
(21) Application number: 14899429.6
(22) Date of filing: 04.08.2014
(51) Int. Cl.: B60L 50/53

(54) **RAIL CAR PROVIDED WITH SYSTEM FOR CONTROLLING STORAGE CELL DISCHARGE**
SCHIENENFAHRZEUG MIT SYSTEM ZUR STEUERUNG DER SPEICHERZELLENTLADUNG
VÉHICULE FERROVIAIRE COMPORTANT UN SYSTÈME DE COMMANDE DE DÉCHARGE D'ACCUMULATEUR

(43) Date of publication of application: 14.06.2017
(73) Proprietor: Hitachi, Ltd., Tokyo 100-8280 (JP)
(72) Inventor: HASEGAWA, Daisuke, Tokyo 100-8280 (JP); UEKI, Naoji, Tokyo 100-8280 (JP); ABEMATSU, Shinichi, Tokyo 100-8280 (JP); YAMAGUCHI, Takuma, Tokyo 100-8280 (JP)
(74) Representative: Mewburn Ellis LLP
(86) International application number: PCT/JP2014/070428
(87) International publication number: WO 2016/020963

(56) References cited:
- JP-A- H0 937 406
- JP-A- S61 251 401
- JP-A- S61 251 401
- JP-A- 2000 295 701
- JP-A- 2000 295 701
- JP-A- 2001 145 201
- JP-A- 2001 145 201
- JP-A- 2004 048 854
- JP-A- 2004 180 371
- JP-A- 2004 180 371

## Description

### Technical Field

The present invention relates to a railway vehicle including a storage battery discharge control system for extending a discharge time of a storage battery included in the railway vehicle when power supply to the railway vehicle is stopped and securing a capacity of the storage battery needed to reboot an auxiliary power supply device when power supply is restarted.

### Background Art

A railway vehicle includes an auxiliary power supply device for supplying power to an air conditioner, a lighting device, a protective device, and the like by converting a voltage or a frequency obtained from an overhead line or a third rail (hereinafter, generally referred to as "overhead line") and a storage battery (battery) for supplying power to the protective device, a communication device, and the like instead of the auxiliary power supply device when power supply from the overhead line is stopped.

When power supply from the overhead line is restarted, the auxiliary power supply device is rebooted by power supplied from the storage battery and then restarts supplying power to each of the above devices. However, in a case where power supply from the overhead line is interrupted for a long time, it may take a long time to restart operation of the railway vehicle because power needed to reboot the auxiliary power supply device does not remain in the storage battery.

As a technique prepared for such a case, JP-A-2000-295701 (PTL 1) discloses a technique in which a portable battery and a connecting device for connecting this portable battery to a railway vehicle are prepared, the portable battery is brought into a railway vehicle that has stalled due to interruption of power supply from an overhead line, and power is supplied from the portable battery to an auxiliary power supply device that cannot be rebooted, thereby rebooting the auxiliary power supply device and restarting operation of the railway vehicle.

### Citation List

### Patent Literature(s)

PTL 1: JP-A-2000-295701
JP S61 1251401 A proposes a capacitor to supply a voltage to a gate circuit of a power source to start the power source.

### Summary of Invention

### Technical Problem(s)

A technique in which a portable battery is carried to a railway vehicle that cannot be operated due to overdischarge of an in-vehicle battery and then power is supplied to the railway vehicle from this portable battery to restore the railway vehicle as described in PTL 1 is advantageous in restoring the railway vehicle with comparative ease in a case where the railway vehicle is stopped at a place at which the portable battery can be carried with no special problems. However, also in a case where the railway vehicle cannot be stopped in front of a platform of a station due to, for example, blackout caused by earthquake and is stopped inside a tunnel, on a bridge, or in other places for a long time, it is necessary to carry the portable battery from a storage place thereof to a place at which the railway vehicle has stalled, and there is a problem to be solved in terms of quickly restarting operation regardless of a stop position of the railway vehicle.

Further, mounting a battery having a large capacity on a railway vehicle in preparation for interruption of power supply for a long time may cause new problems such as a problem of a place to install a battery and a problem that a weight of a composition of the railway vehicle is increased to exceed an allowable axle load.

An object of the invention is to provide a railway vehicle capable of controlling discharge of a storage battery (battery) included in the railway vehicle to maintain a long power supply time using the storage battery in preparation for interruption of power supply for a long time and securing a remaining capacity for rebooting an auxiliary power supply device in the storage battery to quickly restart operation.

### Solution to Problem(s)

According to the invention, there is provided a railway vehicle as set out in claim 1.

### Advantageous Effects of Invention

According to the invention, it is possible to provide a railway vehicle capable of, in a case where power supply from an overhead line is stopped, quickly restarting operation after power supply from the overhead line is restored without closing communication with the outside by controlling discharge of at least two storage batteries included in the railway vehicle to maintain a long power supply time using those storage batteries and securing a remaining capacity for rebooting an auxiliary power supply device in a first storage battery. Brief Description of Drawings

[Fig. 1] Fig. 1 is a schematic diagram showing arrangement of devices connected to a low-voltage power supply wiring circuit of a monorail composition.
[Fig. 2] Fig. 2 is a cross-sectional view (A-A cross-section in Fig. 1) crossing a longitudinal direction of a crew room in a first car of a monorail composition.
[Fig. 3] Fig. 3 is a wiring diagram of devices connected to a low-voltage power supply wiring circuit.
[Fig. 4] Fig. 4 is a timing diagram including a time at which power supply from an overhead line is stopped and a time at which power supply is restarted, the timing diagram showing a change in output of an auxiliary power supply device, a timing of charging each storage battery and supplying power to each storage battery, and a timing of disconnecting or reconnecting a device (load) from/to a low-voltage power supply wiring circuit.

### Description of Embodiments

Hereinafter, an embodiment of the invention will be described in detail with reference to the drawings. A railway vehicle is a general term for transport vehicles operated along laid railways and specifically means a railroad car, a monorail car, a vehicle for a new transportation system, a streetcar, and the like. Herein, an example will be described by using a monorail car as a representative example of the railway vehicle.

### Example

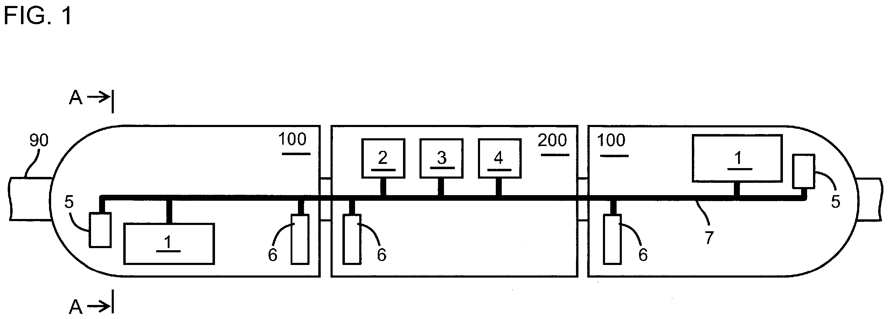

Fig. 1 is a schematic diagram showing arrangement of devices connected to a low-voltage power supply wiring circuit 7 of a monorail composition. The monorail composition is a three-car composition including first cars 100 (both directions of travel) provided with a crew room and a middle car 200. However, the composition is not limited to this three-car composition and encompasses a composition including a plurality of middle cars 200.

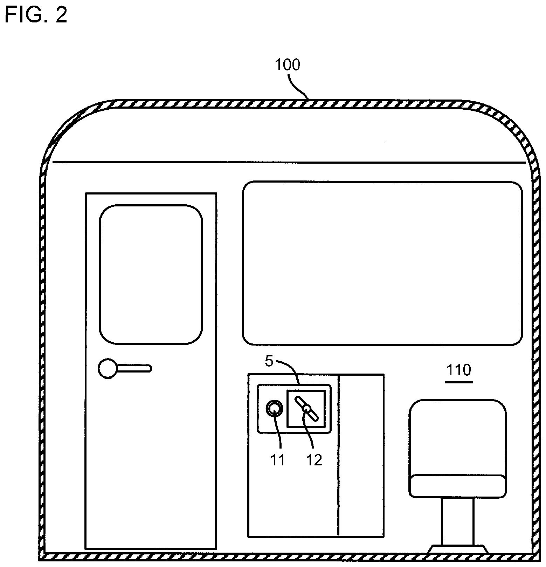

The first car 100 is partitioned by a partition wall 110 into a crew room in which a driver and the like (hereinafter, referred to as "crew") work and a passenger room (see Fig. 2) . Further, a device connected to an auxiliary circuit, such as an auxiliary power supply device 1 for supplying power to service devices such as an air conditioner, a lighting device, and an information display device, is provided under a floor of the first car 100.

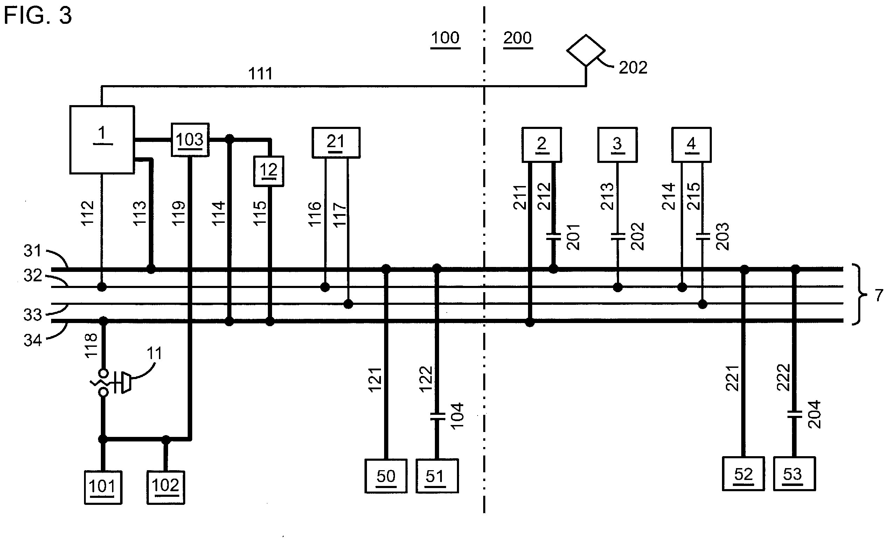

The middle car 200 includes devices connected to a main circuit, such as a power collection device 202 (not shown in Fig. 1, see Fig. 3) for introducing power from an overhead line laid along a side surface of a track beam 90 on which the monorail composition runs, a main motor (not shown) for driving the monorail composition, and a driving control device (not shown) for controlling rpm and torque of the main motor.

An emergency power supply operation panel 5, which is treated when power supply from the overhead line is stopped, is provided on the crew room side of the first car 100 (for example, a place where the emergency power supply operation panel is easily treated such as the partition wall 110). A distribution board 6 in which a relay for controlling a device described below and the like are arranged is provided on an end plate of the first car 100 on the side adjacent to the middle car 200.

Further, the middle car 200 includes a first storage battery 2, a second storage battery 3, and a third storage battery 4 under a floor thereof, and a distribution board 6 in which a relay for controlling a device described below and the like are arranged is provided on an end plate on the side adjacent to the first car 100.

The low-voltage power supply wiring circuit 7 is passed through both the first cars 100 and the middle car 200 and connects the emergency power supply operation panel 5, the distribution board 6, the auxiliary power supply device 1, the first storage battery 2, the second storage battery 3, and the third storage battery 4 as a power supply relationship.

The auxiliary power supply device 1 is a device for converting a high-voltage DC or AC power introduced from the power collection device to the monorail composition into a three-phase AC voltage (200 V) and a frequency (60 Hz) to be supplied to the service devices such as an in-vehicle air conditioner and an in-vehicle lighting device and outputting the three-phase AC voltage and the frequency and is a device for converting the high-voltage DC or AC power into a low-voltage DC voltage (24 V and 100 V) and outputting the low-voltage DC voltage in order to charge each storage battery.

The first storage battery 2, the second storage battery 3, and the third storage battery 4 are storage batteries (batteries) configured by connecting a plurality of battery cells in series. The first storage battery 2 receives/outputs a DC voltage of 100 V, and the second storage battery 3 and the third storage battery 4 receive/output a DC voltage of 24 V.

The first storage battery 2 supplies rebooting power to the auxiliary power supply device 1 at the time of rebooting after power supply from the overhead line is stopped. The second storage battery 3 and the third storage battery 4 supply power to an external communication device 21 (see Fig. 3) via which a station or an operation control center and a monorail car communicate with each other.

Fig. 2 is a cross-sectional view (A-A cross-section in Fig. 1) crossing a longitudinal direction of the crew room in the first car of the monorail composition. The partition wall 110 of the first car 100 is a wall for partitioning the first car into the crew room and the passenger room, and the emergency power supply operation panel 5 treated when power supply from the overhead line is stopped is provided on the crew room thereof.

The emergency power supply operation panel 5 includes a load disconnecting switch 11 for stopping power supply to, for example, service devices (other than emergency light) such as an automatic broadcasting device and a lighting device and an auxiliary power supply device input switching switch 12 for supplying power from the first storage battery 2 to reboot the auxiliary power supply device 1 when power supply from the overhead line is restarted. Herein, the automatic broadcasting device and the lighting device other than the emergency light are devices to which power does not need to be supplied in a case where power supply from the overhead line is stopped.

Note that the load disconnecting switch 11 and the auxiliary power supply device input switching switch 12 are not treated at the time of normal operation and are therefore covered by, for example, a cover (not shown) made of acryl to restrain wrong operation of those switches.

Fig. 3 is a wiring diagram of devices connected to the low-voltage power supply wiring circuit 7. Fig. 3 shows the low-voltage power supply wiring circuit 7 provided through one of the first cars 100 and the middle car 200 constituting the monorail composition and devices connected to this wiring circuit 7.

The DC low-voltage power supply wiring circuit 7 is passed through the whole length of the cars of the monorail composition. This low-voltage power supply wiring circuit 7 is made up of a 100 V line 31, a 24 V line 32, an external communication device 24 V line 33, and a control circuit 100 V line 34.

Power supplied from the power collection device 202 provided under the floor of the middle car 200 is introduced to the auxiliary power supply device 1 via a wire 111. Power converted in the auxiliary power supply device 1 is supplied to the 24 V line 32 via a wire 112, to the 100 V line 31 via a wire 113, and to the control circuit 100 V line 34 via a wire 114 and a wire 115. Herein, the auxiliary power supply device input switching switch 12 for starting supplying DC power from the first storage battery 2 to the auxiliary power supply device 1 in order to reboot the auxiliary power supply device 1 is interposed in the wire 115.

The external communication device 21 is a wireless or wired communication device via which the monorail composition and the operation control center communicate with each other. This external communication device 21 is connected to the 24 V line 32 via a wire 116 and to the external communication device 24 V line 33 via a wire 117, and, because the external communication device 21 is connected to both the 24 V lines, redundancy is improved.

Direct current loads 50 and 52 are made up of the lighting device (emergency light), a door-closing device, and the like and are loads that need to be maintained as a safety function also at the time of emergency at which power supply from the overhead line is stopped. Those DC loads are connected to the 100 V line 31 via wires 121 and 221, respectively.

Direct current loads 51 and 53 are made up of the lighting device other than the emergency light, an information display (monitor) for passengers for displaying information such as a stop station, automatic broadcasting equipment, and the like and are loads to which power is not supplied at the time of emergency (so-called service devices). Those DC loads are connected to the 100 V line 31 via wires 122 and 222 including relays 104 and 204.

The first storage battery 2 is connected to the control circuit 100 V line 34 via a wire 211 and is connected to the 100 V line 31 via a wire 212 including a relay 201.

The second storage battery 3 is connected to the 24 V line 32 via a wire 213 including a relay 202.

The third storage battery 4 is connected to the 24 V line 32 via a wire 214 and is connected to the external device communication 24 V line 33 via a wire 215 including a relay 203.

A wire 118 is connected to the control circuit 100 V line 34 and includes the load disconnecting switch 11 for, after power supply from the overhead line is stopped and power supply from the first storage battery 2 and the second storage battery 3 is started, stopping power supply from those storage batteries to the DC loads 51 and 53. This load disconnecting switch 11 is a switch for controlling operation of a relay sequence circuit 101 connected to the wire 118 and relay sequence circuits 102 and 103 connected to a wire 119.

When the relay sequence circuit 101 operates, contacts of the relays 104 and 204 are disconnected, and power supply to the DC loads 51 and 53 via the 100 V line 31 is stopped.

The relay sequence circuit 102 is a circuit for controlling power supply of the first storage battery 2, the second storage battery 3, and the third storage battery 4. When the relay sequence circuit 102 operates, an incorporated timer (not shown) starts counting for monitoring a remaining capacity of the first storage battery 2. When a time at which the remaining capacity of the first storage battery 2 is reduced to a remaining capacity needed to reboot the auxiliary power supply device 1 comes, this timer disconnects contacts of the relays 201 and 202 and stops power supply of the first storage battery 2 and the second storage battery 3. Although the second storage battery 3 does not relate to rebooting of the auxiliary power supply device 1, power supply thereof is stopped to restrain acceleration of deterioration in a storage battery performance caused by overdischarge. In addition, a contact of the relay 203 included in the wire 215 that connects the third storage battery 4 and the external communication device 24 V line 33 is closed, and power supply from the third storage battery 4 to the external communication device 21 is continued.

When the relay sequence circuit 103 operates, a contact of a relay (not shown) for controlling input of controlling power to the auxiliary power supply device 1 via the control circuit 100 V line 34 is opened. With this, power supply from the control circuit 100 V line 34 to the auxiliary power supply device 1 is stopped. Regarding this power supply from the control circuit 100 V line 34 to the auxiliary power supply device 1, controlling power is received via the control circuit 100 V line 34 to which power is supplied by the first storage battery 2 in order to stably operate the auxiliary power supply device 1 even in a case where the power collection device 202 is momentarily separated from the overhead line (not shown) laid on the track beam 90 while the monorail composition is running under normal operation (in a state in which power is supplied from the overhead line). Therefore, power supply from the control circuit 100 V line 34 to the auxiliary power supply device 1 is stopped by the above-mentioned relay (not shown) at the time of emergency at which power supply from the overhead line is stopped, thereby reducing the load of the first storage battery 2.

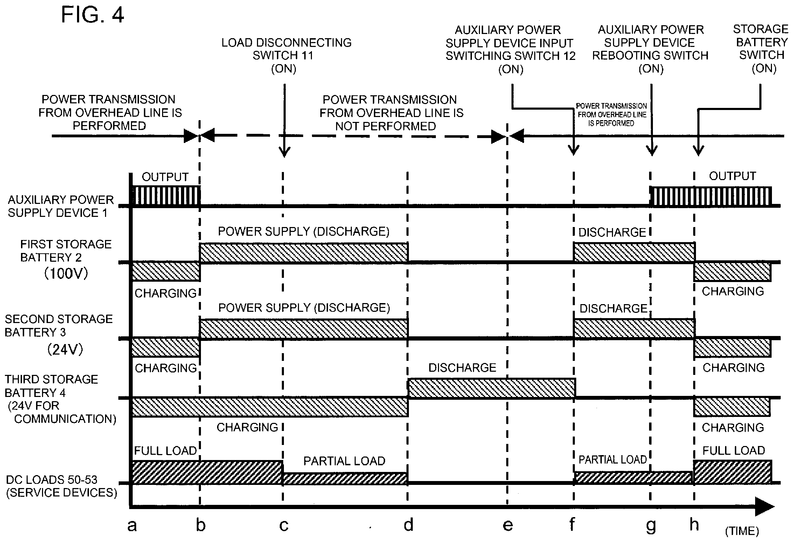

Fig. 4 is a timing diagram including a time at which power supply from the overhead line is stopped and a time at which power supply from the overhead line is restarted, the timing diagram showing a change in output of the auxiliary power supply device, a timing of charging each storage battery and supplying power to each storage battery, and a timing of disconnecting or reconnecting a device (load) from/to the low-voltage power supply wiring circuit 7. A vertical axis of Fig. 4 indicates operation statuses of the auxiliary power supply device 1, the first storage battery 2, the second storage battery 3, the third storage battery 4, and the DC loads 50 to 53. A horizontal axis of Fig. 4 is a time axis and shows a time a to a time h. Hereinafter, functions of the above-mentioned devices and effects exerted by those functions will be described with reference to Fig. 4.

In a time period from the time a to the time b, normal operation of the monorail composition is continued, and all the DC loads 50 to 53 receive power output by the auxiliary power supply device 1 and provide various services to passengers. Furthermore, part of power output by the auxiliary power supply device 1 is provided to charge the first storage battery 2, the second storage battery 3, and the third storage battery 4.

Power transmission of the overhead line is stopped for some reason at the time b. The running monorail composition is quickly stopped by operating an emergency brake. A stop place cannot be selected because this stop is an emergency stop. Therefore, in a case where the monorail composition is stopped at a station, the monorail composition is kept stopping in front of a platform, whereas, in a case where the monorail composition runs between stations, the monorail composition is stopped on an elevated railroad in some cases. The auxiliary power supply device 1 stops supplying power to the 100 V line 31, the 24 V line 32, the external communication device 24 V line 33, and the control circuit 100 V line 34. Thereafter, power supply to the 100 V line 31 and the control circuit 100 V line 34 is automatically started by discharge from the first storage battery 2, and power supply to the 24 V line 32 is started by discharge from the second storage battery 3.

A crew operates the load disconnecting switch 11 at the time c. The relay sequence circuit 101 is operated by the load disconnecting switch 11 ("ON" in Fig. 4), and the DC loads 51 and 53 are separated from the 100 V line 31. With this, the load of the first storage battery 2 is reduced. Next, the timer included in the relay sequence circuit 102 starts counting. This counting is for monitoring a timing at which the remaining capacity of the first storage battery 2 is smaller than the power capacity needed to reboot the auxiliary power supply device 1. That is, it can be said that this timer is control means for causing the power capacity needed to reboot the auxiliary power supply device 1 to remain in the first storage battery. Further, the relay sequence circuit 103 operates, and controlling power (load) to the auxiliary power supply device 1 is separated from the 100 V line 31. With this, the load of the first storage battery 2 is further reduced. With the above operation, it is possible to considerably reduce the load of the first storage battery 2, and therefore it is possible to extend a power supply time of the first storage battery 2 to the DC loads 50 and 52 at the time of emergency.

At the time d, a counter of the timer included in the relay sequence circuit 102 determines a timing at which the remaining capacity becomes the remaining capacity needed to reboot the auxiliary power supply device 1, and power supply from the first storage battery 2 and the second storage battery 3 is stopped. With this operation, power supply from the second storage battery 3 to the external communication device 24 V line 33 is stopped, but power supply to the external communication device 24 V line 33 is started by discharge from the third storage battery 4. The third storage battery 4 is charged by the second storage battery 3 in a time period from the time b to the time d after the auxiliary power supply device 1 is stopped, and therefore the third storage battery 4 is charged to an upper limit of a capacity thereof at the time d.

In this way, operation of the timer included in the relay sequence circuit 102 can restrain overdischarge of the first storage battery 2 and cause the power capacity needed to reboot the auxiliary power supply device 1 to remain. Furthermore, the third storage battery 4 starts supplying power to the external communication device 24 V line 33 in exchange for stop of power supply of the second storage battery 3, and therefore the crew of the monorail composition can continuously maintain a communication function between a station worker of the nearest station and the operation control center. With this, the crew can receive notification of restart of power supply from the overhead line from the operation control center via an external communication device and can quickly reboot the auxiliary power supply device 1 after the crew receives the notification.

The operation control center notifies, via an external communication device, the crew of restart of power supply from the overhead line between the time d and the time e, and power transmission from the overhead line is restored at the time e.

At the time f, the crew treats the auxiliary power supply device switching switch 12 to perform restoration operation ("ON" in Fig. 4) in order to reboot the auxiliary power supply device 1. With this, the auxiliary power supply device 1 enters a booting standby state. With this restoration operation, discharge (power supply) from the first storage battery 2 and the second storage battery 3, which is stopped by the above-mentioned timer function, is restarted. With this, power is also supplied to a control power supply for the auxiliary power supply device 1 again.

The crew turns on an auxiliary power supply device rebooting switch at the time g ("ON" in Fig. 4). With this, the auxiliary power supply device 1 is quickly rebooted, and output of DC power (100 V and 24 V) is restarted.

The crew turns on a storage battery switch at the time h ("ON" in Fig. 4). With this, charging each storage battery is restarted, and the monorail composition restarts normal operation performed before the time b at which power transmission from the overhead line is interrupted. Further, the DC loads return to the full load state.

Overdischarge of each storage battery included in the monorail composition can be restrained by a series of operation (processing) modes described above. Further, it is possible to reduce loads of DC devices with respect to the storage batteries, and therefore it is possible to continue a service to passengers for a longer time by using the storage batteries. Furthermore, it is possible to secure power supply to the external communication device, and therefore it is possible to continue communication between the operation control center and a crew, and, after power supply to the overhead line is restored, it is possible to quickly reboot the auxiliary power supply device.

As a method of causing the minimum power capacity needed to reboot the auxiliary power supply device 1 to remain in the first storage battery 2, there is a method of securing a power capacity that the first storage battery 2 should remain by monitoring the remaining power capacity of the first storage battery 2 and a discharge current of the first storage battery 2. However, with this method, a measuring instrument (CT, voltmeter, or the like) for monitoring the remaining power capacity and the discharge current (voltage) is needed, which is a factor to increase the number of components and costs.

According to an example of the invention, a power suppliable time is calculated on the basis of consumption power of a device serving as a load of the first storage battery 2 and a storage capacity of the first storage battery 2, and this time is managed only by the timer. Therefore, it is possible to reboot the auxiliary power supply device 1 with a simple configuration without increasing the number of components or costs.

As described above, it is possible to eliminate the necessity of bringing a portable battery into a monorail composition that is urgently stopped in order to reboot an auxiliary power supply device in the monorail composition as in conventional methods, and it is possible to avoid or restrain an abnormal situation in which operation of the monorail composition is stopped for a long time.

### Reference Signs List

- 1: auxiliary power supply device
- 2: first storage battery
- 3: second storage battery
- 4: third storage battery
- 5: emergency power supply operation panel
- 6: distribution board
- 7: low-voltage power supply wiring circuit
- 11: load disconnecting switch
- 12: auxiliary power supply device input switching switch
- 21: external communication device
- 31: 100 V line
- 32: 24 V line
- 33: external communication device 24 V line
- 34: control circuit 100 V line
- 50, 52: DC load (emergency light)
- 51, 53: DC load
- 90: track beam
- 100: first car (Tc car)
- 200: middle car (M car)
- 101, 102, 103: relay sequence circuit
- 111 to 119, 121, 122, 211 to 215, 221, 222: wire
- 104, 201, 202, 203, 204: relay

## Claims

1. A railway vehicle, comprising:
an auxiliary power supply device (1) for converting power supplied from an overhead line and supplying power to a DC load (50, 51, 52, 53);
a first storage battery (2) for supplying power to the DC load (50, 51, 52, 53) in a case where power supplied from the overhead line is stopped and a second storage battery (3) for supplying power to a communication device (21) for external communication in a case where power supplied from the overhead line is stopped; and
control means for, after the power supply from the overhead line is stopped, causing a power capacity needed to reboot the auxiliary power supply device (1) to remain in the first storage battery (2),
wherein:
the control means is configured to start operating at a time at which the first storage battery (2) starts supplying power to the DC load (50, 51, 52, 53) and configured to stop power supply from the first storage battery (2) at a time at which a remaining power capacity of the first storage battery (2) becomes the power capacity needed to reboot the auxiliary power supply device (1), and
after the power supply from the overhead line is restored, the auxiliary power supply device (1) is rebooted by the remaining capacity of the first storage battery (2).

2. The railway vehicle according to claim 1, further comprising
a load disconnecting means, and
a plurality of the DC loads comprising an emergency DC load (50, 52) needed to operate even at the time of an emergency, and a non-emergency DC load (51, 53) other than the emergency DC load, wherein, after the power supply from the overhead line is stopped, the non-emergency DC load (51, 53) is separated from the first storage battery (2) by operating the load disconnecting means.

3. The railway vehicle according to claim 1 or claim 2,
wherein the control means also stops power supply from the second storage battery (3) at a timing at which power supply from the first storage battery (2) is stopped.

4. The railway vehicle according to claim 3, further comprising
a third storage battery (4),
wherein, when power supply from the second storage battery (3) is stopped, the third storage battery (4) starts supplying power to the communication device (21) for external communication.

5. The railway vehicle according to claim 4,
wherein the second storage battery (3) charges the third storage battery (4) until power supply of the second storage (3) battery is stopped by the control means.

## Patentansprüche

1. Schienenfahrzeug, umfassend:
eine Hilfsleistungsversorgungsvorrichtung (1) zum Umwandeln einer von einer Oberleitung zugeführten Leistung und zum Versorgen einer Gleichstromlast (50, 51, 52, 53) mit Leistung;
eine erste Speicherbatterie (2) zum Versorgen einer Gleichstromlast (50, 51, 52, 53) mit Leistung, wenn eine von der Oberleitung zugeführte Leistung gestoppt wurde, und eine zweite Speicherbatterie (3) zum Versorgen einer Kommunikationsvorrichtung (21) zur externen Kommunikation mit Leistung, wenn eine von der Oberleitung zugeführte Leistung gestoppt wurde; und
ein Steuermittel, um nach dem Stoppen der Leistungsversorgung von der Oberleitung zu bewirken, dass eine zum Neustart der Hilfsleistungsversorgungsvorrichtung (1) erforderliche Leistungskapazität in der ersten Speicherbatterie (2) verbleibt,
wobei:
das Steuermittel ausgelegt ist, um den Betrieb zu einem Zeitpunkt zu starten, an dem die erste Speicherbatterie (2) beginnt, die Gleichstromlast (50, 51, 52, 53) mit Leistung zu versorgen, und ausgelegt ist, um die Leistungsversorgung von der ersten Speicherbatterie (2) zu einem Zeitpunkt zu stoppen, an dem eine Restleistungskapazität der ersten Speicherbatterie (2) zu der Leistungskapazität wird, die zum Neustart der Hilfsleistungsversorgungsvorrichtung (1) erforderlich ist, und
nachdem die Leistungsversorgung von der Oberleitung wiederhergestellt ist, die Hilfsleistungsversorgungsvorrichtung (1) durch eine Restkapazität der ersten Speicherbatterie (2) neu gestartet wird.

2. Schienenfahrzeug nach Anspruch 1, ferner umfassend
ein Lasttrennmittel, und
eine Vielzahl von Gleichstromlasten, die eine Notfalls-Gleichstromlast (50, 52) umfassen, die erforderlich ist, um einen Betrieb auch im Notfall zu ermöglichen, und eine Nicht-Notfalls-Gleichstromlast (51, 53), die sich von der Notfalls-Gleichstromlast unterscheidet,
wobei, nachdem die Leistungsversorgung von der Oberleitung gestoppt wurde, die Nicht-Notfalls-Gleichstromlast (51, 53) durch Betreiben des Lasttrennmittels von der ersten Speicherbatterie (2) getrennt wird.

3. Schienenfahrzeug nach Anspruch 1 oder 2,
wobei das Steuermittel zu einem Zeitpunkt, an dem die Leistungsversorgung von der ersten Speicherbatterie (2) gestoppt wird, auch die Leistungsversorgung von der zweiten Speicherbatterie (3) stoppt.

4. Schienenfahrzeug nach Anspruch 3, ferner umfassend
eine dritte Speicherbatterie (4),
wobei die dritte Speicherbatterie (4) beginnt, die Kommunikationsvorrichtung (21) für externe Kommunikation mit Leistung zu versorgen, wenn die Leistungsversorgung von der zweiten Speicherbatterie (3) gestoppt wird.

5. Schienenfahrzeug nach Anspruch 4,
wobei die zweite Speicherbatterie (3) die dritte Speicherbatterie (4) lädt, bis die Leistungsversorgung der zweiten Speicherbatterie (3) von dem Steuermittel gestoppt wird.

## Revendications

1. Véhicule ferroviaire, comprenant :
un dispositif d'alimentation électrique auxiliaire (1) pour convertir de l'énergie fournie par une caténaire et fournir de l'énergie à une charge CC (50, 51, 52, 53) ;
une première batterie de stockage (2) pour fournir de l'énergie à la charge CC (50, 51, 52, 53) dans un cas où l'énergie fournie par la caténaire est arrêtée et une deuxième batterie de stockage (3) pour fournir de l'énergie à un dispositif de communication (21) pour une communication externe dans un cas où l'énergie fournie par la caténaire est arrêtée ; et
des moyens de commande pour, après l'arrêt de l'alimentation électrique depuis la caténaire, amener une capacité d'énergie nécessaire pour redémarrer le dispositif d'alimentation électrique auxiliaire (1) à rester dans la première batterie de stockage (2),
dans lequel :
les moyens de commande sont configurés pour commencer à fonctionner à un moment auquel la première batterie de stockage (2) commence à fournir de l'énergie à la charge CC (50, 51, 52, 53) et configurés pour arrêter une alimentation électrique depuis la première batterie de stockage (2) à un moment où une capacité d'énergie restante de la première batterie de stockage (2) devient la capacité d'énergie nécessaire pour redémarrer le dispositif d'alimentation électrique auxiliaire (1), et
après le rétablissement de l'alimentation électrique depuis la caténaire, le dispositif d'alimentation électrique auxiliaire (1) est redémarré par la capacité restante de la première batterie de stockage (2).

2. Véhicule ferroviaire selon la revendication 1, comprenant en outre
des moyens de déconnexion de charge, et
une pluralité des charges CC comprenant une charge CC d'urgence (50, 52) nécessaire pour fonctionner même au moment d'une urgence, et une charge CC non d'urgence (51, 53) autre que la charge CC d'urgence,
dans lequel, après l'arrêt de l'alimentation électrique depuis la caténaire, la charge CC non d'urgence (51, 53) est séparée de la première batterie de stockage (2) en actionnant les moyens de déconnexion de charge.

3. Véhicule ferroviaire selon la revendication 1 ou la revendication 2,
dans lequel les moyens de commande arrêtent également une alimentation électrique depuis la deuxième batterie de stockage (3) à une synchronisation à laquelle une alimentation électrique depuis la première batterie de stockage (2) est interrompue.

4. Véhicule ferroviaire selon la revendication 3, comprenant en outre
une troisième batterie de stockage (4),
dans lequel, lorsqu'une alimentation électrique depuis la deuxième batterie de stockage (3) est arrêtée, la troisième batterie de stockage (4) commence à fournir de l'énergie au dispositif de communication (21) pour une communication externe.

5. Véhicule ferroviaire selon la revendication 4,
dans lequel la deuxième batterie de stockage (3) charge la troisième batterie de stockage (4) jusqu'à ce que l'alimentation électrique depuis la deuxième batterie de stockage (3) soit arrêtée par les moyens de commande.
